Europäisches Patentamt

European Patent Office

Office européen des brevets

(11) Veröffentlichungsnummer: **0 405 112 A2**

# (12) EUROPÄISCHE PATENTANMELDUNG

(21) Anmeldenummer: 90109140.5

(22) Anmeldetag: 15.05.90

(51) Int. Cl.5: **B23B 17/00, B23Q 1/02**

(30) Priorität: 30.06.89 DE 3921648

(43) Veröffentlichungstag der Anmeldung:
02.01.91 Patentblatt 91/01

(84) Benannte Vertragsstaaten:
CH DE FR GB IT LI SE

(71) Anmelder: Boehringer Werkzeugmaschinen GmbH
Stuttgarter Strasse 50 Postfach 220
D-7320 Göppingen(DE)

(72) Erfinder: Kuhn, Siegfried, Ing.-grad
Gammelshauserstrasse 8
D-7321 Dürnau(DE)
Erfinder: Mühlich, Werner
Gneisenausstrasse 1
D-7334 Süssen(DE)

Erfinder: Räder, Robert, Ing.
St.-Galler-strasse 17
D-7320 Göppingen(DE)
Erfinder: Ritz, Otmarm, Dipl.-Ing.
Hauptstrasse 121
D-7321 Birenbach(DE)
Erfinder: Schulten, Hermann, Ing.
Brückenstrasse 46
D-7321 Birenbach(DE)
Erfinder: Unruh, Manfred, Dipl.-Ing. (FH)
Hohenstaufenstrasse 52
D-7320 Göppingen(DE)

(74) Vertreter: Vogeser, Werner, Dipl.-Ing. et al
Patentanwälte + Rechtsanwälte Hansmann,
Vogeser, Boecker & Alber
Albert-Rosshaupter-Strasse 65 65
D-8000 München 70(DE)

(54) Thermo-neutrale Führung.

(57) Die Erfindung betrifft eine Werkzeugmaschine mit wenigstens einem wenigstens in X-Richtung, bewegbaren Werkzeug, einem Spindelstock zum Befestigen und Antreiben des Werkstückes und einem Reitstock zu Gegenhalten, sowie wenigsten zwei Führungen in Z-Richtung am Bett der Werkzeugmaschine, auf denen der Reitstock und evtl. der Spindelstock verschiebbar sind, wobei die eine Führung in X-Richtung fest und die andere lose ist. Um zu erreichen, daß die unvermeidbare Wärmedehnung der linear beweglichen Komponenten der Werkzeugmaschine zu möglichst geringen Maßabweichungen der zu bearbeitebnden Werkstücke führt, ist diese Maschine derart ausgebildet, daß die erste, in X-Richtung feste, Führung aus wenigstens zwei winklig zueinander liegenden Führungsflächen besteht, die zweite, in X-Richtung lose, Führung wenigstens eine Führungsfläche aufweist, die parallel zu einer der beiden Führungsflächen der ersten Führung liegt, und die Y-Achse mit der Verbindungslinie zwischen der Werkstückmitte und der prismenförmigen, bezüglich der X-Richtung festen, ersten Führung einen Winkel von α1 bildet, welcher gleich einem Winkel α2 ist, der zwischen der Gleitebene der zweiten, in X-Richtung losen Führung und der Verbindungslinie zwischen der ersten und zweiten Führung vorliegt.

FIG. 5

# THERMO-NEUTRALE FÜHRUNG

Die Erfindung betrifft die Ausbildung der linearen Führungdn an Werkzeugmaschinen, insbesondere an Drehmaschinen, aber auch an anderen Werkzeugmaschinen, wenn sie ähnlich wie Drehmaschinen aufgebaut sind, entlang derer die beweglichen Komponenten linear beispielsweise mit Hilfe einer Antriebsspindel verschoben werden. Sowohl Reitstock als auch Spindelstock können entlang des Maschinenbettes verschoben werden, aber auch beispielsweise ein Planschlitten auf einem Bettschlitten.

Um eine stabile Führung der zu bewegenden Einheit zu gewährleisten, werden in aller Regel wenigstens zwei parallel laufende Führungen eingesetzt, auf denen die zu bewegende Einheit in einer bestimmten Richtung, beispielsweise der Z-Richtung der Maschinenlängsachse, verschoben wird, wobei jede einzelne Führung wiederum mehrere Führungsflächen aufweisen kann.

Obwohl sowohl die zu bewegende Einheit als auch die Richtung in der die Führungen verlaufen und entlang der die zu bewegende Einheit entlang der Führungen bewegt werden soll, variieren kann, soll im folgenden der Einfachheit halber nur noch von einem Reitstock die Rede sein, welcher entlang der Führungen in Z-Richtung am Maschinenbett verschiebbar ist. Dennoch ist diese Art der Führung auch für Spindelstock, am Bett verschiebbare Hilfsvorrichtungen oder die Führung zum Führen der Werkzeugsupporte aufeinander anwendbar. Die zu bewegende Einheit, im vorliegenden Fall also der Reitstock, dehnt sich bei Erwärmung, die meist durch die mechanische Reibung innerhalb des Reitstockes im Betrieb der Maschine auftritt, aber auch durch äußere Einflüsse zustandekommen kann, aus, und zieht sich bei Abkühlung wieder zusammen. Dadurch ändert sich der Abstand des im Rebstock festgelegten Mittelpunktes des Werkstückes, der sog. Drehmitte. Somit ändert sich die Lage der Drehmitte in bezug auf das Bett der Maschine in Abhängigkeit von der Temperatur des Reitstockes. Da auch die Bewegungen des das Werkstück bearbeitenden Werkzeuges in Abhängigkeit eines innerhalb des Maschinenbettes definierten Nullpunktes festgelegt sind, ergeben sich Schwankungen in der Maßhaltigkeit der verschiedenen gefertigten Werkstücke in Abhängigkeit von der Temperatur des Reitstockes bei der Herstellung des jeweiligen Werkstückes, da sich der Abstand von der Drehmitte zum Werkzeug je ebenfalls in Abhängigkeit von der Temperatur des Reitstockes ändert.

Die Wärmedehnung des in Z-Richtung bewegbaren Reitstockes ist auch der Grund dafür, warum von den beiden zur Führung des Reitstockes parallel laufenden Führungen die eine als feste und die andere als lose Führung ausgebildet ist, worunter die Bewegungsmöglichkeiten quer zur Längsrichtung der Führungen, in der durch die beiden Führungen definierten Ebene, beispielsweise in X-Richtung, gemeint ist. Liegen beispielsweise die beiden Führungen für den Reitstock waagerecht parallel nebeneinander am Maschinenbett, auf die der Reitstock senkrecht von oben aufgesetzt wird, so besteht die feste Führung beispielsweise aus einer Prismenführung mit zwei winklig zueinander stehenden Führungsflächen in Form eines Daches. Die in X-Richtung lose Führung besteht dagegen aus beispielsweise einer einzelnen Führungsfläche, mit einer Längserstreckung entlang der Z-Achse und einer Quererstreckung, die parallel zu der durch die beiden Führungen definierten Ebene liegt. Bei einer temperaturbedingten Dehnung des Reitstockes wird dieser weiterhin satt auf der Prismenführung aufliegen, wogegen sich die Auflage auf der die zweite Führung bildende, waagrecht liegenden Führungsfläche etwas von der Prismenführung weg verschieben wird, gemäß der Temperaturdehnung des Materials des Reitstockes zwischen den beiden am Reitstock angeordneten Führungen.

Es ist daher die Aufgabe der Erfindung, eine Werkzeugmaschine so auszubilden, daß die unvermeidbare Wärmedehnung der linear beweglichen Komponenten der Werkzeugmaschine zu möglichst geringen Maßabweichungen der zu bearbeitenden Werkstücke führt.

Bei der Drehbearbeitung führt eine Verlagerung des Werkstückmittelpunktes gegenüber der Spitze des Drehwerkzeuges dann zu einer minimal kleinen Durchmesseränderung des Werkstückes, wenn der Versatz des Werkstückmittelpunktes in Y-Richtung, also quer zur Verbindungslinie zwischen der Spitze des Werkzeuges und dem Werkstückmittelpunkt, der X-Richtung, erfolgt. Denn in diesem Fall würde die Spitze des Werkzeuges, wenn sie sich am Umfang des Werkstückes befindet, durch den Versatz des Werkstückmittelpunktes eine Bewegung relativ zum Werkstück entlang einer Tangente zum Werkstückumfang vorgenommen, was aufgrund des kleinen Winkels zwischen der Tangente und dem Werkstückumfang eine wesentlich geringere Durchmesseränderung des Werkstückes ergibt, als die zugrundeliegende Versatzstrecke des Werkstückmittelpunktes.

Der Reitstock muß daher so gestaltet werden, daß ein Versatz des Werkstückmittelpunktes, der ja beispielsweise durch eine im Reitstock gelagerte Körnerspitze festgelegt wird, immer nur in Y-Richtung, also quer zur Verbindungslinie zwischen der Spitze des Werkstückes und dem Werkstückmittelpunkt möglich ist. Bei den bisher bekannten Gestaltungen der Reitstöcke und der Anordnung der Führungen für den Reitstock war dies nicht gegeben. Beispielsweise war im oben beschriebenen Fall einer parallel und waagrecht neben einer Prismenführung verlaufenden Flachführung der durch den Reitstock festgelegte Werkstückmittelpunkt in aller Regel oberhalb und etwa in der Mitte zwischen den beiden Führungen gelegen. Wenn sich nun die Flachführung auf der Höhe der Basis der Prismenführung befand, bedeutete dies beispielsweise, daß der Werkstückmittelpunkt von der Spitze der Prismenführung einen kleineren Abstand hatte als von der Mitte der Flachführung. Setzt man nun eine gleichmäßige Wärmedehnung des ganzen Reitstockes voraus, so wird er sich dadurch zwar insgesamt von beiden Führungen weiter entfernen, jedoch von der Flachführung in absoluten Werten stärker als von der Prismenführung, da aufgrund des größeren Ausgangsabstandes von der Flachführung bei Zugrundelegung gleicher prozentualer Abstandsvergrößerung die absolute Abstandsänderung von der Flachführung größer ist als von der Prismenführung.

Jedoch ist gerade während des Aufheizens des Reitstockes nach der Inbetriebnahme der Maschine, also vor Erreichen eines stabilen Temperaturniveaus, damit zu rechnen, daß in den verschiedenen Bereichen des Reitstockes ungleiche Temperaturen vorliegen. Aufgrund dessen kann es der Fall sein, daß sich der zwischen Prismenführung und Werkstückmittelpunkt gelegene Bereich des Reitstockes stärker dehnt als der Bereich zwischen Werkstückmittelpunkt und Flachführung, was dazu führen würde, daß sich der Werkstückmittelpunkt in absoluten Werten von der Prismenführung stärker entfernt als von der Flachführung.

Auf diese Art und Weise läßt sich über die Bewegung des Werkstückmittelpunktes bei einer temperaturbedingten Ausdehnung des Reitstockes lediglich sagen, daß diese Bewegung Komponenten in Y-Richtung und zwar von den Führungen weg enthält. Ob die Bewegungsrichtung des Werkstückmittelpunktes darüber hinaus auch Komponenten der X-Richtung enthält, und falls ja, ob in positive oder in negative X-Richtung, immer gemessen in bezug auf die zum Maschinenbett feste Spitze der Werkzeuges und unter Berücksichtigung der Festlegung des Reitstockes auf der Prismenführung bezüglich der X-Achse, kann nicht vorhergesagt werden. Die gestellte Aufgabe wird durch die kennzeichnenden Merkmale des Anspruchs 1 gelöst. Sind nämlich der Reitstock und die ihn an der Maschine tragenden Führungen so gestaltet, daß der Winkel α 1zwischen der Y-Achse und der Verbindungslinie zwischen der Drehmitte und der prismenförmigen, bezüglich der X-Richtung festen, ersten Führung und der Winkel α2 zwischen der Gleitebene der zweiten, in X-Richtung losen Führung und der Verbindungslinie zwischen der ersten und der zweiten Führung etwa gleich groß sind, so wird sich bei einer Reitstockausdehnung aufgrund von Temperaturerhöhung die Drehmitte entlang der Verbindungslinie zwischen der Spitze der prismenförmigen ersten Führung und der Drehmitte bewegen. Die Größe dieser Winkel α1 und α2 sollte dabei möglichst gering sein, auf alle Fälle jedoch kleiner als 60°, da in diesem Bereich bereits die Selbsthemmung einsetzt.

Die vorteilhafteste Ausführungsform gemäß der Erfindung wird im folgenden anhand der Figuren beispielhaft näher erläutert.

Es zeigen:

Figur 1 eine schematische Darstellung des Versatzes eines drehend bearbeiteten Werkstückes;

Figur 2 eine Detaildarstellung gemäß Figur 1;

Figur 3 eine schematische Darstellung eines auf einer Werkzeugmaschine aufgesetzten Reitstockes, bei dem die Drehmitte etwa in der Mitte über den beiden Führungsbahnen liegt;

Figur 4 eine Darstellung der geometrischen Relationen zwischen dem Mittelpunkt des Werkstückes und den beiden Führungen für den Reitstock;

Figur 5 eine schematische Seitenansicht einer den erfindungsgemäßen Reitstock enthaltenden Drehmaschine und

Figur 6 eine vergrößerte Detaildarstellung des erfindungsgemäßen Reitstockes.

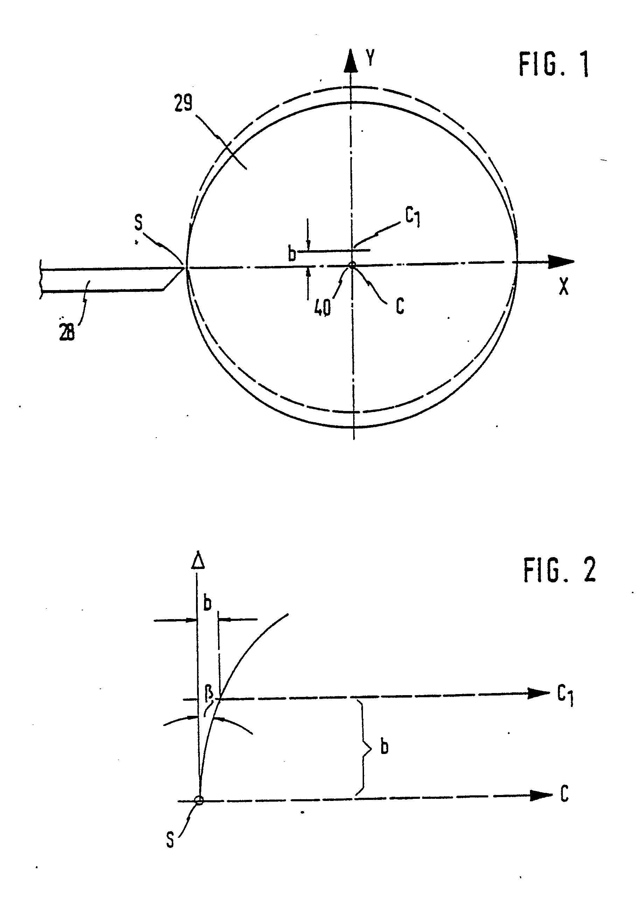

Figur 1 zeigt ein durch Drehen zu bearbeitendes, rotationssymmetrisches Werkstück 29, dessen Drehmitte 40 beispielsweise durch die Spitze eines in einem Reitstock gelagerten Körners gehalten werden kann. Am Umfang des Werkstücks 29 ist die Spitze S eines Werkzeuges 28 im Eingriff, welches zumindest in Richtung auf die Drehmitte 40 zu, also in X-Richtung, bewegbar ist. Verlagert sich nun die Drehmitte 40, beispielsweise aufgrund von Temperaturänderungen des Reitstockes, relativ zum Drehmeißel 28, so ist der Figur 1 und insbesondere der vergrößerten Detaildarstellung der Figur 2 zu entnehmen, daß die Lageveränderung des Werkstückes um die Versatzstrecke b den Radius des herzustellenden Werkstückes bei unveränderter Lage des Drehmeißels 28 am geringsten verändert, wenn die Drehmitte 40 in Y-Richtung, also senkrecht zur Verbindungslinie zwischen der Meißelspitze und der Drehmitte, verlagert wird. Da die Größe der Versatzstrecke b um mehrere Zehnerpotenzen größer dargestellt ist, als dies in der Praxis der Fall ist, ist es unerheblich, ob diese Verbindungslinie, also die Richtung X durch die Ausgangs- oder die Endlage der Drehmitte 40 definiert wird.

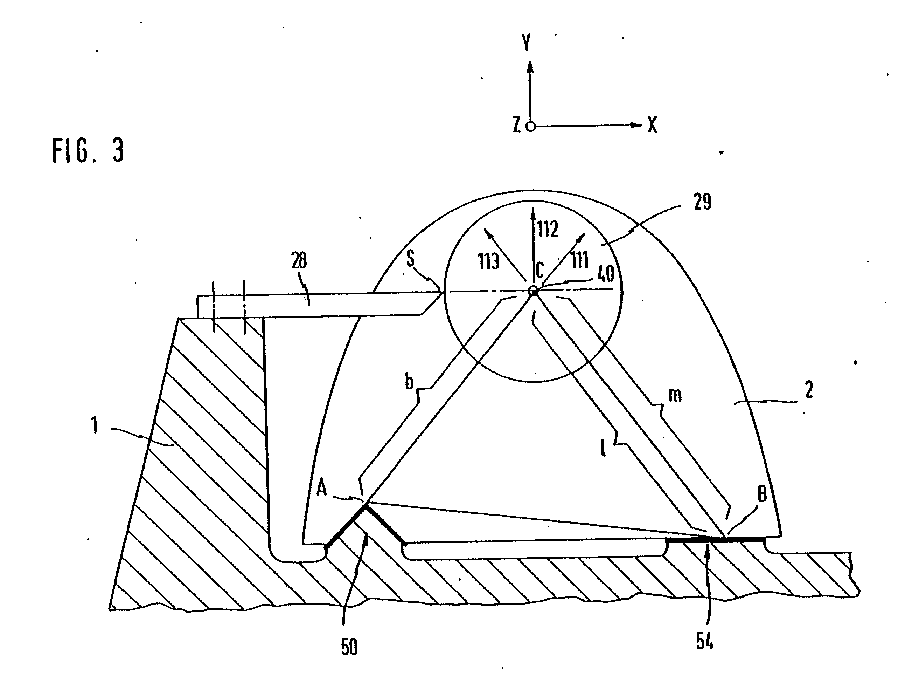

Wie die vergrößerte Detaildarstellung der Figur 2 des Bereiches in der Nähe der Spitze S des Drehmeißels 28 zeigt, führt ein Versatz der Drehmitte 40 um die Versatzstrecke b lediglich zu einer Änderung des Werkstückradius um die Strecke Δb, welche wesentlich geringer als die Strecke b ist. Dies ist auf den kleinen Winkel β zwischen der Umfangslinie des Werkstückes der im Punkt S angesetzten Tangente an diese Umfangslinie zurückzuführen, da geometrisch gesehen

$$\Delta b = b \times \tan \beta$$

gilt. Würde deshalb die Versatzstrecke der Drehmitte 40 zusätzlich zu Komponenten der Y-Richtung noch Komponenten der X-Richtung enthalten, würden diese Komponenten der X-Richtung Veränderungen des Werkstückradius zusätzlich zur Strecke Δb ergeben.Um die geometrischen Verhältnisse beim Stand der Technik zu erläutern, zeigt Figur 3 schematisch einen Reitstock 2, der auf die beiden parallel und waagrecht nebeneinander laufenden Führungen 50 und 54 eines Bettes 1 aufgesetzt ist, wobei es sich bei der Führung 54 um eine Flachführung handelt, die in der Verbindungsebene zwischen den beiden Führungen 50 und 54 liegt, während es sich bei der Führung 54 um eine Prismenführung handelt. In dieser Darstellung ist auch schematisch ein Drehmeißel 28, welcher am Bett 1 befestigt ist, eingezeichnet, dessen Spitze S im Eingriff am Umfang des Werkstückes 29 ist. Die Drehmitte 40 des Werkstückes 29 befindet sich dabei etwa über der Mitte zwischen den beiden Führungen 50 und 54.

Dehnt sich nun der Reitstock 29 aus, so bleibt er unverändert auf der Führung 50 geführt, während aufgrund der Dehnung des Reitstockes 2 ein Verschieben des Reitstockes quer zur Fläche der Führung 54, also in X-Richtung, stattfindet. Da sich der Reitstock 2 zusätzlich normalerweise auch in der Höhe ausdehnen wird, ergibt sich hierdurch eine Verlagerung der Drehmitte 40 etwa in Richtung des Pfeiles 111, der Verlängerung der Verbindungslinie zwischen der Spitze der Prismenführung 50 und der Drehmitte 40. Zur Vereinfachung der Beschreibung wurden die für den Versatz der Drehmitte 40 relevanten Punkte, nämlich die Spitze der prismenförmigen Führung 50, die Mitte der flachen Führung 54 sowie die Drehmitte 40 in dieser Reihenfolge als geometrische Punkte A, B und C bezeichnet. Dabei wurde der Abstand zwischen A und C mit 1 benannt, wogegen der Abstand zwischen C und B mit m angegeben ist.

Befindet sich die Führungsfläche der flachen Führung 54 auf der Höhe der Basis der prismenförmigen Führung 50, wie in Figur 3 dargestellt und der Punkt C und damit die Drehmitte 40 etwa über der Mitte zwischen den beiden Führungen 50 und 54, so gilt

$$\overline{AC} < \overline{BC} \text{ oder } 1 < m.$$

Für den Fall, daß der Unterschied zwischen den Längen der beiden Strecken l und m nur geringfügig ist, wird sich bei einer in etwa gleichmäßigen Dehnung des Reitstockes 2 wegen der Festlegung des Reitstockes 2 der Punkt C, wie beschrieben, in etwa in Richtung des Pfeiles 111 bewegen.

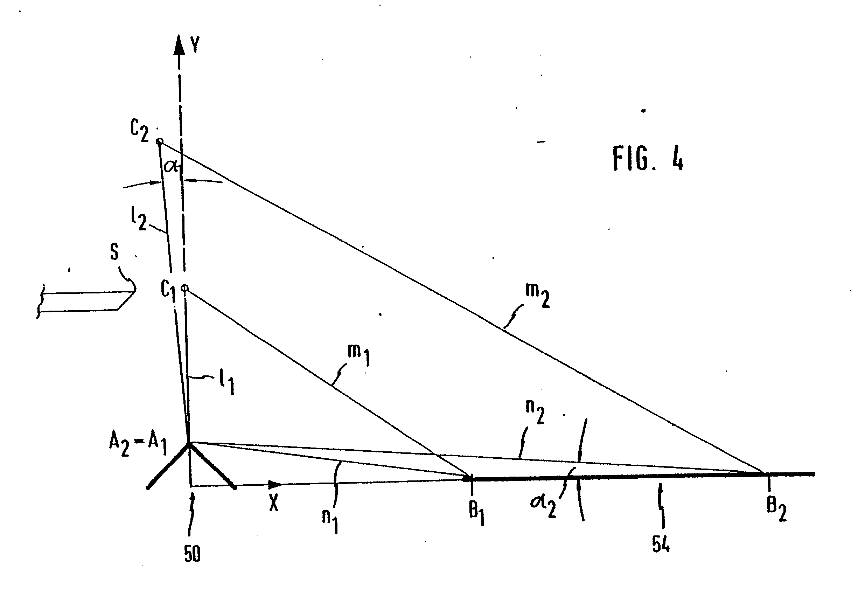

Figur 4 zeigt eine der Figur 3 ähnliche Darstellung, wobei wiederum Punkt A die Spitze der prismenförmigen Führung 50, B die Mitte der flachen Führung 54 und C den Mittelpunkt des nicht mehr dargestellten Werkstückes also die Drehmitte 40,bezeichnet. In Figur 4 wurde jedoch die Lage der Drehmitte 40, also des Punktes C, direkt über der prismenförmigen Führung 50 gewählt. Die mit dem Index 1 versehene Bezeichnung, also das Dreieck $A_1$, $B_1$, $C_1$ stellt den Ausgangszustand dar, wogegen die Indexierung mit der Fußnote 2 den Zustand nach einer stark übertrieben dargestellten Wärmedehnung bezeichnet. Gleichzeitig wurden die Strecken $\overline{AC}$ mit l bezeichnet und die Strecken $\overline{BC}$ mit m und die Strecken $\overline{AB}$ mit n.

Diese Figur 4 zeigt somit eine Anordnung, bei der der Punkt C, also die Drehmitte 40, senkrecht über die Spitze der prismenförmigen Führung 50 liegt, so daß also $l_1$ genau in Y-Richtung liegt. Bei einer Dehnung des Reitstockes und damit des Dreieckes $A_1B_1C_1$ ergibt sich somit das Dreieck $A_2B_2C_2$, wobei die Punkte $A_1$ und $A_2$ zusammenfallen, da ja der Reitstock auf der prismenförmigen Führung 50 in X-Richtung festgelegt und durch sein Eigengewicht auch in Y-Richtung auf dieser Führungsanlage gehalten wird. Da bei gleichmäßiger Dehnung des Reitstockes und damit des Dreieckes ABC der Winkel beispielsweise an der Ecke A, also $A_1$ bzw. $A_2$ der gleiche bleiben muß, ergibt sich aus der Figur 4, daß sich der Punkt $C_1$ nicht genau entlang der Y-Richtung verlagert sondern von dieser abweicht, da bei der Dehnung des Dreieckes ABC die Strecke n einen immer flacheren Winkel gegenüber der X-Richtung annimmt, wie ein Vergleich von $n_1$ und $n_2$ zeigt.

Da ein Reitstock auf einer Flachführung wie etwa der Führung 54 nicht in einem exakten Punkt B, sondern entlang einer Fläche aufliegt, kommt durch die Winkeländerung zwischen der Strecke n und der X-Richtung noch ein zusätzliches Aufkanten der Auflagefläche des Reitstockes auf der flachen Führung 54 hinzu, die sich aufgrund der einstückigen Ausbildung eines Reitstockes auch auf die prismenförmige Führung 50 überträgt. Deshalb wird sich in der Praxis sogar der Punkt $A_2$ vom Punkt $A_1$ entfernen, was ein zusätzliches Abrücken des Punktes $C_2$ von der Y-Achse der Figur 4 bewirkt.

Damit wird klar, daß eine Überlagerung der Drehmitte 40 bzw. des Punktes C genau entlang der Y-Richtung nicht allein dadurch erreicht werden kann, daß sich die Drehmitte 40 genau in Y-Richtung über der in X-Richtung festen Führung der Z-Achse befindet.

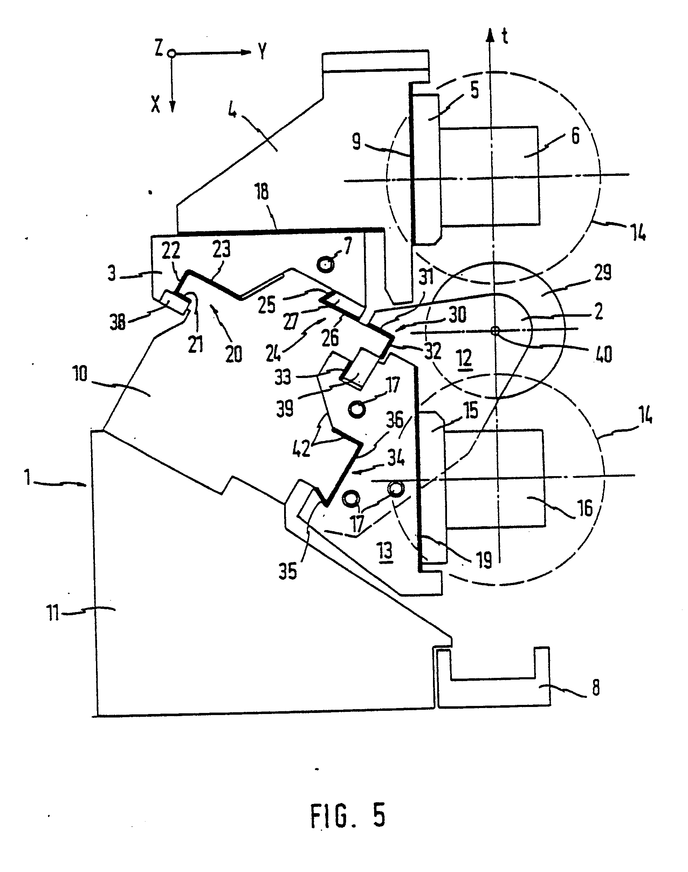

Figur 5 zeigt eine Seitenansicht einer Drehmaschine mit der erfindungsgemäßen Gestaltung des Reitstockes und der hierfür erforderlichen Führungsflächen am Bett 1 der Maschine. Dieses Bett 1 besteht aus einem Bettoberteil 10, welches wenigstens teilweise aus Metall besteht, sowie einem Bettunterteil 11, welches aus Zementbeton besteht. Auf der Oberseite des Bettoberteiles 10 ist in Z-Richtung der Bettschlitten 3 entlang der Führungen 20 und 24 geführt. Dabei besteht die Führung 20 aus drei einzelnen Führungsflächen 21, 25 und 23, die jeweils im rechten Winkel und benachbart zueinander verlaufen, so daß die Führungsflächen 21 und 23 zueinander parallel sind. Die Führung 24 besteht aus den beiden Führungsflächen 25 und 26, die im spitzen Winkel zueinander stehen und in denen die Keilleiste 27 geführt wird, welche am Bettschlitten 3 befestigt ist. Ebenso ist am Bettschlitten 3 die Leiste 38 befestigt, welche die Führung 20 hintergreift. Der Antrieb des Bettschlittens 3 erfolgt über eine Antriebsspindel 7, die ebenfalls in Z-Richtung verläuft.

Auf dem Bettschlitten 3 ist in Y-Richtung ein Obersupport 4 entlang wenigstens einer Führung 18 geführt, deren spezielle Gestaltung für den vorliegenden Sachverhalt ebenso unerheblich ist wie die Ausbildung der Führung 9, mit deren Hilfe am Obersupport 4 der Planschlitten 5,der eine erste Befestigungseinheit 6 für Werkzeuge trägt, in X-Richtung geführt wird. An der Befestigungseinheit 6 kann auch ein Werkzeugrevolver 14 angeordnet werden, wie er mit gestrichelten Linien angedeutet ist. An der Vorderseite der Werkzeugmaschine ist ebenfalls in Z-Richtung ein weiterer Planschlitten 13 geführt, dessen Antrieb über eine der Antriebsspindeln 17 geschieht. Geführt wird dieser zweite Bettschlitten 13 zum einen durch die Führung 34, die aus der Führungsfläche 36 und der hintergreifenden Führungsfläche 35 besteht und durch eine weitere Führung, die aus den Führungsflächen 42 und 33 besteht.

An diesem Bettschlitten ist in X-Richtung wiederum ein Planschlitten 15 entlang einer Führung 19 geführt, wobei sich an diesem Planschlitten 15 wiederum eine Befestigungseinheit 16 für Werkzeuge oder den angedeuteten Werkzeugrevolver befindet.

Ebenfalls an der Vorderseite der Werkzeugmaschine ist der Reitstock 2 in Z-Richtung entlang des Bettes 1 entlang der beiden Führungen 30 und 34 geführt. Dadurch kommt die Drehmitte 40 des Werkstückes 29 zwischen den beiden Befestigungseinheiten 6 und 16 für Werkzeuge und damit vor der vordersten Stützkante des Bettes 1 zu liegen, so daß von den Bearbeitungsstellen aus ein freier Spänefall nach unten in den Späneförderer 8 gegeben ist.

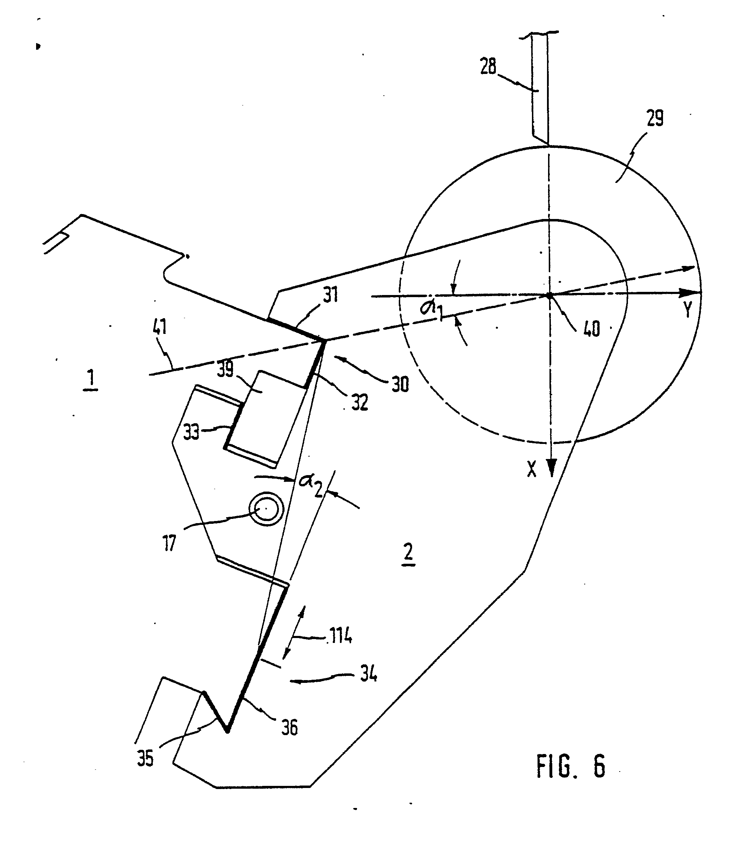

Die Details des erfindungsgemäßen Reitstockes 2 können am besten anhand der gegenüber der Figur 5 vergrößerten Figur 6 beschrieben werden:

Zunächst einmal greift der Drehmeißel 28 von der oberen Befestigungseinheit 6 über Werkzeuge, bzw. vom oberen Revolver 14 aus genau in X-Richtung oberhalb der Drehmitte 40 des Werkstückes 29 am Werkstück an. Die Führung 30 ist eine Prismenführung bestehend aus zwei im rechten Winkel zueinander liegenden Führungsflächen 31 und 32. Die Wirklinie der Führung 30 verläuft dabei durch die Drehmitte 40 und bildet mit der Y-Richtung einen Winkel $\alpha 1$. Die Gleitebene, also die Führungsfläche 36, bildet mit der Verbindungslinie der beiden Führungen 30 und 34 einen Winkel $\alpha 2$. Die Winkel $\alpha 1$ und $\alpha 2$ sind etwa gleich groß, in diesem Fall ca 10°. Da die beiden Führungsflächen 31 und 32 zum Schwerpunkt des Reitstockes 2 hinweisen und somit kein Hintergreifen gegeben ist, wird das Ablösen von den Führungsflächen 31 und 32 durch eine zusätzliche, hintergreifende Führungsfläche 33 verhindert. Diese hintergreifende Führungsfläche 33 befindet sich an einer Leiste 39, welche am Bett 1 befestigt ist, um die Montage des Reitstockes 2 zu ermöglichen. Der Antrieb des Reitstockes 2 geschieht über die Antriebsspindel 17. Die Führung 30 bildet somit eine Führung entlang der Z-Richtung, welche den Reitstock 2 bezüglich der X-Richtung festhält.

Die zweite Führung 34 des Reitstockes 2 besteht im wesentlichen aus einer Führungsfläche 36, welche im Abstand von der Führung 30 angeordnet ist, und parallel zur Führungsfläche 32 verläuft. Da es sich auch bei der Führungsfläche 36 um eine überhängende Führungsfläche handelt, ist eine zusätzliche, hintergreifende Führungsfläche 35 notwendig, um das Abheben des Reitstockes 2 von der Führungsfläche 36 unter bestimmten Umständen zu verhindern, indem gegenüber der Führungsfläche 35 im Bett hydraulisch betätigte Ausgleichselemente, sogenannte PEKO-Elemente, die ständige Anlage der Führungsflächen 35 und 36 sicherstellen. Dies ändert jedoch nichts an der erfindungsgemäß beabsichtigten Tatsache, daß sich bei einer Dehnung des Reitstockes 2 dieser entlang der Führungsfläche 36, also senkrecht zur Z-Richtung, verschiebt, wie mit der Richtung 114 angegeben. Durch die parallele Anordnung der Führungsfläche 32 und 36 ergibt sich kein Aufkanten des Reitstockes 2 auf einer der Führungsflächen 31, 32 oder 36, so daß zumindest bei gleichmäßiger Temperatur des Reitstockes die Drehmitte 40 immer auf der durch den Scheitel der beiden Führungsflächen 31, 32 gelegten Y-Richtung liegt. Doch auch bei unterschiedlichen Temperaturen innerhalb des Reitstockes 2 kommt es wegen der Parallelität der Führungsflächen 32 und 36 nur bei ganz extremen Temperaturunterschieden zu nennenswerten Aufkantungen des Reitstockes 2 auf seinen Führungsflächen und damit zu Abweichungen der Drehmitte 40 von der in Y-Richtung verlaufenden Winkelhalbierenden 41.

**Ansprüche**

1. Werkzeugmaschine mit wenigstens einem wenigstens in X-Richtung, also der durch die Spitze des Werkzeuges und den Mittelpunkt des Werkstückes festgelegten Richtung, bewegbaren Werkzeug, einem Spindelstock zum Befestigen und Antreiben des Werkstückes und einem Reitstock zum Gegenhalten des Werkstückes sowie wenigstens zwei Führungen in Z-Richtung am Bett der Werkzeugmaschine, auf denen der Reitstock und evtl. der Spindelstock verschiebbar sind, wobei die eine Führung in X-Richtung fest und die andere lose ist,
**dadurch gekennzeichnet, daß**
- die erste, in X-Richtung feste, Führung (30) aus wenigstens zwei winklig zueinander liegenden Führungsflächen (31, 32) besteht,
- die zweite, in X-Richtung lose, Führung (34) wenigstens eine Führungsfläche (36) aufweist, die parallel zu einer der beiden Führungsflächen (31, 32) der ersten Führung (30) liegt und
- die Y-Achse mit der Verbindungslinie zwischen der Werkstückmitte und der prismenförmigen, bezüglich der X-Richtung festen, ersten Führung(30) einen Winkel $\alpha 1$ bildet, welcher gleich einem Winkel $\alpha 2$ ist, der zwischen der Gleitebene der zweiten, in X-Richtung losen Führung und der Verbindungslinie zwischen der ersten und zweiten Führung vorliegt.
2. Werkzeugmaschine nach Anspruch 1,
**dadurch gekennzeichnet, daß**
die Winkelhalbierende (41) senkrecht zur X-Richtung, nämlich in Y-Richtung verläuft.
3.Werkzeugmaschine nach einem der vorhergehenden Ansprüche,
**dadurch gekennzeichnet, daß**
die Drehmitte (40) genau auf der Winkelhalbierenden (41) liegt.
4. Werkzeugmaschine nach einem der vorhergehenden Ansprüche,
**dadurch gekennzeichnet, daß**
die Führungsflächen (31) und (32) der Führung (30) nahe beisammen liegen.
5. Werkzeugmaschine nach einem der vorhergehenden Ansprüche,
**dadurch gekennzeichnet, daß**
die Führungsflächen (31) und (32) aneinandergrenzen.
6. Werkzeugmaschine nach einem der vorhergehenden Ansprüche,

**dadurch gekennzeichnet, daß**
die parallel laufenden Führungsflächen (31) und (32) der Führung (30) im rechten Winkel zueinander liegen.
7. Werkzeugmaschine nach einem der vorhergehenden Ansprüche,
**dadurch gekennzeichnet, daß**
die Führungsfläche (36) der Führung (34) in einem möglichst großen Abstand von der ersten Führung (30) angeordnet ist.
8. Werkzeugmaschine nach einem der vorhergehenden Ansprüche,
**dadurch gekennzeichnet, daß** es sich bei der Werkzeugmaschine um eine Drehmaschine handelt und die Werkstückmitt die Drehmitte (40) ist.
9. Werkzeugmaschine nach einem der vorhergehenden Ansprüche,
**dadurch gekennzeichnet, daß** sowohl der Winkel $\alpha 1$ als auch der Winkel $\alpha 2$ Null Grad betragen.

FIG. 1

FIG. 2

FIG. 3

EP 0 405 112 A2

FIG. 4

FIG. 5

FIG. 6

11